# EUROPEAN PATENT APPLICATION

(11) **EP 1 617 266 A1**
(43) Date of publication of application: **18.01.2006**
(21) Application number: 04799463.7
(22) Date of filing: 02.11.2004
(51) Int. Cl.: G02B 21/00

(54) **MICROSCOPE AND MEASURE-TAKING METHOD AGAINST MICROSCOPE STATIC ELECTRICITY DISCHARGE**

(30) Priority: 28.01.2004 JP 2004020114
(71) Applicant: Olympus Corporation, Tokyo 151-0072 (JP)
(72) Inventor: NONODA, Yukio Olympus Int. Pop. Serv. Co., LTD, Hachioji-shi Tokyo 182-8512 (JP)
(74) Representative: von Hellfeld, Axel
(86) International application number: PCT/JP2004/016260
(87) International publication number: WO 2005/073775

(57) **Abstract**

A main body (4) of a microscope includes an optical path switching knob (4a) for switching between bright-field and darkfield observations, a focusing handle (4b) for focusing on a specimen, and rubber legs (4d) mainly for stable placement of the microscope and prevention of vibration. The main body (4) has an opening portion for slider at a side surface of a projection section, and a cap (4c) for slider is attached to the opening. For ensuring safety of an operator and preventing damage to a mechanism, a rubber plate (4e) is provided just under a stage (8). The stage (8) has an XY operation handle (8a) for positioning of the specimen. The optical path switching knob (4a), focusing handle (4b), cap (4c), rubber legs (4d), rubber plate (4e), and XY operation handle (8a) are formed of conductive rubber.

## Description

### Technical Field

The present invention relates to a microscope.

### Background Art

When electricity is discharged from a charged conductive object to an electronic circuit or a semiconductor device, the electronic circuit fails to operate properly, or the semiconductor device is damaged. This is a serious problem. Thus, in a step of examining a semiconductor device, an antistatic floor, an antistatic operation table, an antistatic chair, and an antistatic instrument, etc. are used; an electrification level is controlled by using managing humidity or using an ionizer. Also, an operator wears a specific cloth, specific shoes, and a specific wrist strap as an anti-electrostatic-discharge measure.

Actually, even if an electrostatic discharge (ESD) is not very large, it can sufficiently cause the electronic circuit to fail to operate properly, or the semiconductor device to be damaged. Thus, there is a case where when an ESD occurs, it cannot be perceived by the operator, thus giving rise to a problem.

In order to avoid such a problem, Patent No. 3359035 proposes a microscope in which an injection molded plastic member comprising a combination of a metal conductive member and conductive polymer is grounded, thereby causing static charges to be quickly disappeared through the metal conductive member.

Furthermore, Jpn. Pat. Appln. KOKAI Publication No. 2001-350097 discloses an antistatic measure in which coatings of units of a microscope are formed by a plating method, a chemical and synthetic processing method, and a coating method, so as to ensure continuity between the units.

### Disclosure of Invention

Generally, in a microscope, members for improving the operability, preventing the leakage of harmful light, and preventing the entrance of extraneous light or dust are formed of silicon-based rubber that has small sensitization to skin of a human body. The silicon-based rubber does not have such conductivity as to solve an electrostatic discharge problem. Thus, as described in Patent No. 3359035, a microscope (e.g., semiconductor inspecting microscope) that needs an anti-electrostatic-discharge measure has a structure in which silicon-based rubber is not adopted, as its anti-electrostatic-discharge measure.

For example, an eyeshade, which is attached to a conventional eyepiece and formed of silicon-based rubber, is changed to an eyeshade formed of conductive resin. Alternatively, the eyepiece is changed to an eyepiece not provided with an eyeshade. As a result, a fit feeling for an operator during the observation and advantage of preventing a stray light are lost.

Further, materials of a knob and a lever both for use in effecting switching between various kinds of microscopy, a handle of a focusing section, a dimmer-volume, and other things are changed from silicon-based rubber whose elasticity and surface friction enable an operator to easily operate them to resin or metal that causes them to easily slip. As a result, a satisfactory operability is lost.

Furthermore, in the case where infrared rays, ultraviolet rays, laser light, or the like is applied to microscopy, a mechanism for preventing harmful light from leaking out from the microscope, which traditionally has completely shielded, from light, gaps in opening portions for units with silicon-based rubber having soft elasticity, must completely shield them from light with resin or metal. As a result, the structure is complicated, and cannot be formed at a low cost. The same is true of a mechanism for preventing entrance of extraneous light or dust.

As stated above, a conventional anti-electrostatic-discharge measure loses an inherent advantage of a conventional microscope. As a result, a user cannot satisfactorily use it, or must buy an expensive microscope.

The present invention has been made in view of such circumstances, and its object is to provide a microscope to which an anti-electrostatic-discharge measure is applied without losing an inherent advantage of the conventional microscope.

According to one aspect, the present invention is directed to a microscope. In a microscope according to the present invention, part of the microscope that is supposed to be directly touched by an observer using the microscope during an observation is formed of conductive rubber, or is provided with a coating of conductive rubber.

According to another aspect, the present invention is directed to an anti-electrostatic-discharge method for a microscope. An anti-electrostatic-discharge method according to the present invention includes forming part of the microscope that is supposed to be directly touched by the observer using the microscope during the observation with conductive rubber, or providing a coating of conductive rubber at the part of the microscope that is supposed to be directly touched by the operator during the observation.

### Brief Description of Drawings

FIG. 1 is a side view of a semiconductor examination microscope according to an embodiment of the present invention.
FIG. 2 is a front view of the semiconductor examination microscope shown in FIG. 1.
FIG. 3 is a top view of the semiconductor examination microscope shown in FIG. 1.
FIG. 4 is a perspective view of an eyepiece of the semiconductor examination microscope shown in FIG. 1.

### Best Mode for Carrying Out the Invention

An embodiment of the present invention will be explained with reference to the accompanying drawings.

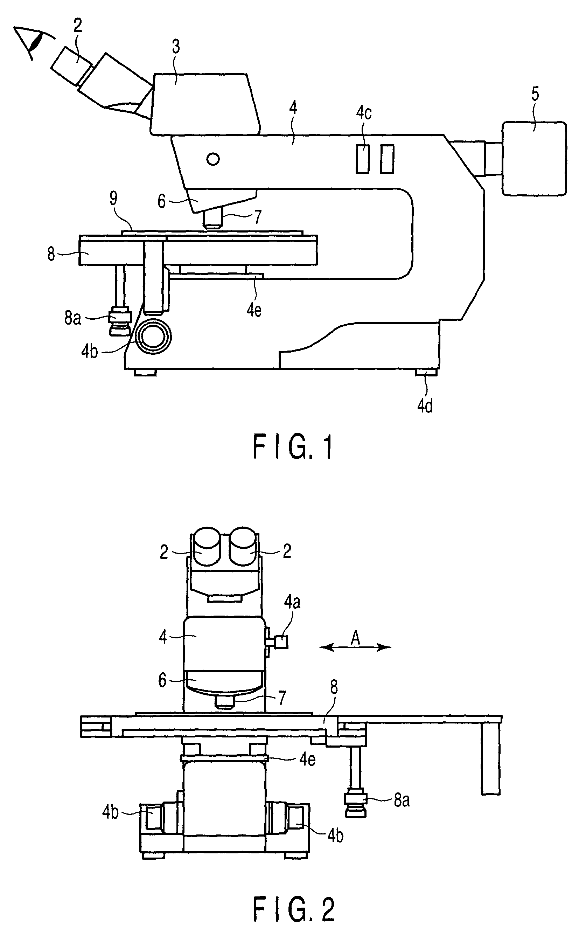

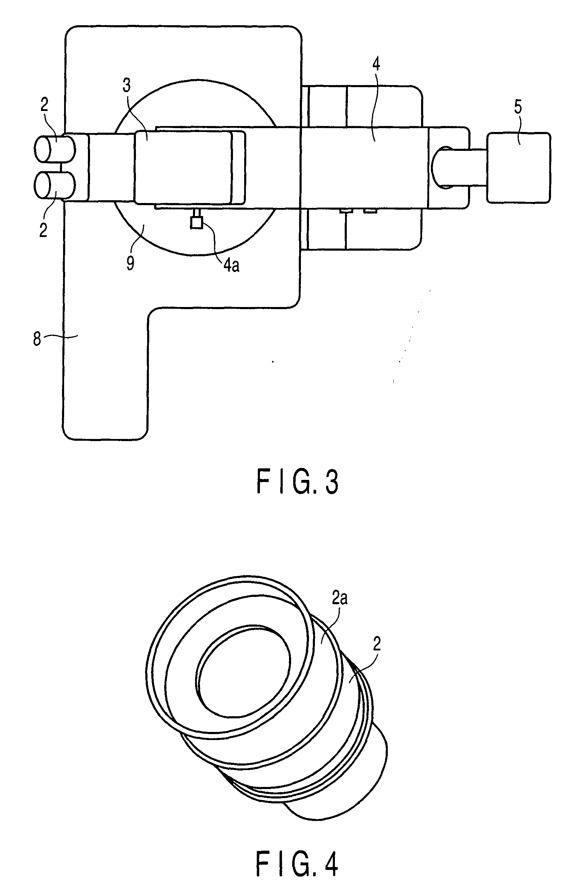

FIG. 1 is a side view of a semiconductor examination microscope according the embodiment of the present invention. FIG. 2 is a front view of the semiconductor examination microscope shown in FIG. 1. FIG. 3 is a top view of the semiconductor examination microscope shown in FIG. 1.

As shown in FIGS. 1 to 3, the semiconductor examination microscope comprises eyepieces 2, a lens barrel 3 that holds the eyepieces 2, a main body 4 that holds the barrel 3, a lamp house 5 attached to the main body 4, a revolver 6 held on the main body 4, an objective 7 attached to the revolver 6, and a stage 8 mounted on the main body 4. A semiconductor wafer specimen 9 is placed on the stage 8.

The main body 4 comprises an optical path switching knob 4a that are inserted and withdrawn in a direction indicated by an arrow A for switching between bright-field and darkfield observations, and a focusing handle 4b for focusing on the specimen. The main body 4 has, on the underside, a plurality of rubber legs 4d mainly for stable placement of the microscope and prevention of vibration.

The main body 4 has, at a side surface of a projecting section that projects light of the lamp house 5, an opening portion for a filter slider that allows insertion and withdrawal of a member including, e.g., a color conversion filter, for changing observation light to illumination that enables observation to be more easily carried out. When the filter slider is inserted in the projection section, the gap between the filter slider and the opening portion is small, but when the filter slider is removed from the projection section, a large opening appears. Thus, in order to prevent harmful light from leaking out and extraneous light or dust from entering the projection section, a cap 4c for slider is attached to the opening portion as a member that closes the opening portion. The cap 4c is formed of rubber, and has an outer shape slightly larger than the opening portion. Accordingly, by insertion utilizing soft and flexible deformation, the cap 4c can reliably close the opening portion without providing a gap, so as to block the projection section from the outside.

A rubber plate 4e is provided directly below the stage 8 in order to ensure safety of an operator and prevent damage to a mechanism. The rubber plate 4e functions as a protection film that prevents the operator's fingers or a tool from carelessly contacting an internal mechanism of the microscope, and also has a function to prevent the fingers from being caught between a lower portion of the stage 8 and the main body 4 during focusing. The rubber plate 4e has an opening portion that is necessary for vertical movement of the stage, and its gap is very small.

The stage 8 is provided with an XY operation handle 8 for use in positioning the specimen.

The optical path switching knob 4a, focusing handle 4d, slider cap 4c, rubber legs 4d, rubber plate 4e, and XY operation handle 8a, which are supposed to be directly touched by an observer using the microscope during an observation, are formed of conductive rubber, and are electrically connected to metal parts in the internal mechanism, and finally to external part.

The conductive rubber comprises, e.g., conductive silicon-based rubber that has small sensitization to skin of a human body. The conductive silicon-based rubber contains, e.g., carbon, so as to have conductivity. The conductive silicon-based rubber may have desirably conductivity that causes a charge of electricity to be disappeared quickly, to be more specific, its surface resistance value may be 10⁵ to 10⁹ (Ω/□). Suppose conductive silicon-based rubber that will be referred to in the following description has the same function as the above conductive silicon-based rubber, and its explanation will not be repeated.

The eyepiece 2, as shown in FIG. 4, has an eyeshade 2a. The eyeshade 2a is also a part that supposed to be directly touched by the observer using the microscope during the observation, and is therefore formed of conductive silicon-based rubber, which is electrically connected to an exterior portion of metal part. It is ensured that the eyepieces 2, as well as other units, are electrically connected to metal part.

When an operator operates an operation section (the optical path switching knob 4a, focusing handle 4b, and YX operation handle 8a), static electricity easily generates due to rubbing by repeated operations. In the above structure, however, the operation section (the optical path switching knob 4a, focusing handle 4b, and YX operation handle 8a) does not become charged with electricity, since it is electrically connected to the external part. Thus, nor does the operator become charged with electricity from the operation section (the optical path switching knob 4a, focusing handle 4b, and YX operation handle 8a).

The cap 4c for slider, rubber legs 4d, and rubber plate 4e are not frequently touched by the operator. However, even if they are carelessly touched by the operator, they do not become charged with electricity, since they are electrically connected to the external part. Thus, nor does the operator become charged with electricity from them.

Although the operator's skin may touch the eyeshade 2a during an observation, the eyeshade 2a does not become charged with electricity, as it is electrically to the external part. Nor does the operator become charged with electricity from the eyeshade 2a.

By virtue of the above structure and operation, the microscope according to the embodiment of the present invention has the following advantages:

The operation section gives an anti-electrostatic-discharge measure to the microscope, and provides a satisfactory operability due to its elasticity of rubber and its surface friction.

The cap 4c for slider gives an anti-electrostatic-discharge to the microscope, and reliably prevents harmful light from leaking out from the projection section and extraneous light or dust from entering the projection section. In addition, it can be formed at a low cost. This advantage is typical of a rubber material whose elastic deformation is large, so that another material is difficult to form it at a low cost.

The rubber legs 4d can dissipate electricity from the microscope to the outside without the need to ground the main body 4 to the outside by using an earth wire.

The rubber plate 4e gives an anti-electrostatic-discharge measure, preventing the operator from getting hurt and the internal mechanism from being damaged by a carelessly touch to the internal mechanism, and also ensuring safety that prevents the operator's fingers from being caught. Since it is formed of soft rubber material, the operator does not get hurt, even if the operator's fingers should be caught. Another material cannot give the above advantages at a low cost and easily.

The eyeshade 2a of the eyepiece gives an anti-electrostatic-discharge measure, also provides the operator a fit feeling during the observation, and reliably prevents a stray light. Although the eyeshade 2a contacts weak part of the operator's skin, there is no fear of the skin getting a rash or the like, since the eyeshade 2a has small sensitization to skin of a human body.

In the above description, the embodiment of the present invention is explained with reference to the accompanying drawings. However, the present invention is not limited to the embodiment, that is, various modifications or changes may be made without departing from the subject matter of the present invention.

For example, the present embodiment explains a case in which the rubber plate is applied to the mechanism of the focusing section in order to ensure the safety of the operator and prevent the mechanism from being broken, but it is not limited to this, the rubber plate may be applied to a precision mechanism or an electric mechanism, such as an electric manipulation, an electric stage, and an electric revolver. In addition, the conductive silicon-based rubber, application of which is not limited to this, may be applied to a structural member of the microscope that utilizes elastic deformation.

Further, part of the microscope that is supposed to be directly touched by the operator during the observation is formed of conductive rubber in the embodiment, but it is not limited to this, the part that is supposed to be directly touched may be provided with a coating of conductive rubber, instead of being formed of conductive rubber. That is, it suffices that at least a surface of the part of the microscope that is supposed to be directly touched by the operator during the observation has conductive rubber.

Furthermore, conduction of electricity from the conductive silicon-based rubber may be achieved in combination with what has conductivity, such as conductive plating, conductive coating, or conductive resin.

Furthermore, in order to have conductivity, the conductive silicon-based rubber is made to contain carbon in the embodiment, but it is not limited to this, alternatively, the conductive silicon-based rubber may be made to contain any material that has small sensitization to skin of a human body.

The conductive silicon-based rubber may be applied, but it is not limited to the semiconductor examination microscope, to a measuring instrument or a microscope that needs an anti-electrostatic-discharge measure, such as a stereoscopic microscope. Needless to say, it may be applied to a measuring instrument or a microscope, which does not need an anti-electrostatic-discharge measure.

### Industrial Applicability

The present invention provides a microscope to which an electrostatic discharge measure is applied without losing the advantages of a conventional microscope.

## Claims

1. A microscope in which a part that is supposed to be directly touched by an observer using the microscope during an observation is formed of conductive rubber, or is provided with a coating of conductive rubber.

2. The microscope according to claim 1, wherein the part that is supposed to be directly touched by the observer during the observation comprises an operation section of the microscope.

3. The microscope according to claim 1, wherein the part that is supposed to be directly touched by the observer during the observation comprises a member that closes an opening portion of the microscope.

4. The microscope according to claim 1, wherein the part that is supposed to be directly touched by the observer during the observation comprises a protection film that prevents a finger of an operator or an instrument from carelessly contacting an internal mechanism of the microscope.

5. The microscope according to claim 1, wherein the part that is supposed to be directly touched by the observer during the observation comprises a rubber leg for enabling the microscope to be placed stably.

6. The microscope according to claim 1, wherein the conductive rubber comprises conductive silicon-based rubber has small sensitization to skin of a human body.

7. The microscope according to claim 1, wherein the conductive rubber has a surface resistance value of 10⁵ to 10⁹ (Ω/□).

8. The microscope according to claim 1, wherein the part that is supposed to be directly touched by the observer during the observation comprises an eyeshade of an eyepiece, and the eyeshade is formed of conductive silicon-based rubber that has a surface resistance value of 10⁵ to 10⁹ (Ω/□) and small sensitization to skin of a human body.

9. An anti-electrostatic-discharge method for a microscope including forming part of the microscope that is supposed to be directly touched by the observer during an observation with conductive rubber, or providing a coating of conductive rubber at the part of the microscope that is supposed to be directly touched by the observer during an observation.

10. The anti-electrostatic-discharge method according to claim 9, wherein forming an operation section of the microscope with conductive rubber, or providing a coating of conductive rubber at the operation section of the microscope.

11. The anti-electrostatic-discharge method according to claim 9, wherein forming a member that closes an opening portion of the microscope with conductive rubber, or providing a coating of conductive rubber at the member that closes the opening portion of the microscope.

12. The anti-electrostatic-discharge method according to claim 9, wherein forming a protection film that prevents a finger of an operator or an instrument from carelessly contacting an internal mechanism of the microscope with conductive rubber, or providing a coating of conductive rubber at the protection film that prevents the finger of the operator or the instrument from carelessly contacting the internal mechanism of the microscope.

13. The anti-electrostatic-discharge method according to claim 9, wherein forming a rubber leg for enabling the microscope to be placed stably with conductive rubber, or providing a coating of conductive rubber at the rubber leg for enabling the microscope to be placed stably.

14. The anti-electrostatic-discharge method according to claim 9, wherein selecting, as the conductive rubber, conductive silicon-based rubber has small sensitization to skin of a human body.

15. The anti-electrostatic-discharge method according to claim 9, wherein selecting, as the conductive rubber, conductive rubber having a surface resistance value of 10⁵ to 10⁹ (Ω/□).

16. The anti-electrostatic-discharge method according to claim 9, wherein forming an eyeshade of an eyepiece with conductive silicon-based rubber that has a surface resistance value of 10⁵ to 10⁹ (Ω/□) and small sensitization to skin of a human body.
